# EUROPEAN PATENT SPECIFICATION

(11) **EP 4 666 539 B1**
(45) Date of publication and mention of the grant of the patent: **14.10.2026**
(21) Application number: 24700634.9
(22) Date of filing: 17.01.2024
(51) Int. Cl.: H04L 9/40

(54) **INFECTION IN A COMMUNICATIONS NETWORK**
INFEKTION IN EINEM KOMMUNIKATIONSNETZ
INFECTION DANS UN RÉSEAU DE COMMUNICATION

(30) Priority: 16.02.2023 EP 23157062
(43) Date of publication of application: 24.12.2025
(73) Proprietor: British Telecommunications public limited company, London, Greater London E1 8EE (GB)
(72) Inventor: BEARD, Alfie, London Greater London E1 8EE (GB); MAGALHAES MARQUES, Pedro, London Greater London E1 8EE (GB); ROSCOE, Jonathan, London Greater London E1 8EE (GB)
(74) Representative: British Telecommunications public limited company Intellectual Property Department
(86) International application number: PCT/EP2024/051050
(87) International publication number: WO 2024/170197

(56) References cited:
- WO-A1-2019/185404
- WO-A1-2021/198295
- US-B1- 10 178 120
- CHEN Z ET AL: "Spatial-Temporal Modeling of Malware Propagation in Networks", IEEE TRANSACTIONS ON NEURAL NETWORKS, IEEE SERVICE CENTER, PISCATAWAY, NJ, US, vol. 16, no. 5, 1 September 2005 (2005-09-01), pages 1291 - 1303, XP011139154, ISSN: 1045-9227, DOI: 10.1109/TNN.2005.853425

## Description

The present disclosure relates to how to deal with communications networks infected with malicious material such as malware, ransomware and other malicious material.

### BACKGROUND

Communications networks are continually threatened by malicious activity which includes malware, ransomware and endpoint attacks. Evaluation of and determining appropriate responses to such threats are an essential part of communications network maintenance so that the damage caused to communications network nodes can be minimised. It is also important that such threats are addressed quickly to minimise damage.

The examples described herein are not limited to examples which solve problems mentioned in this background section.

WO2019/185404A1 describes a computer implemented method of protecting a target subnet in a hierarchy of subnets of a computer network from malware attack, the subnet including a set of network connected devices, the method comprising: generating a dynamical system for each subnet in the network, each dynamical system modelling a rate of change of a number of network connected devices in the subnet that are: susceptible to infection by the malware; infected by the malware; protected against infection by the malware; and remediated of infection by the malware, the dynamical systems being based on rates of transmission of the malware between pairs of subnets; evaluating a measure of risk of infection of the target subnet at a predetermined point in time based on the dynamical system for the target subnet; and responsive to the measure of risk meeting a predetermined threshold, deploying malware protection measures to devices in the target subnet.

US10178120B1 describes is a system for determining contagion dynamics on a multilayer network wherein the system determines a functional epidemic threshold for disappearance of a contagion on a multilayer network model according to a score value s=λβ/δ, where λ corresponds to an adjacency matrix of the first layer of the multilayer network model, β represents a spread rate of the contagion, and δ represents a recovery rate. A prediction of future behaviour of the contagion on the multilayer network model using the functional epidemic threshold is output and utilized to inform decisions regarding connectivity within a multilayer network in order to prevent spread of the contagion on a multilayer network.

### SUMMARY

The invention is defined by the appended independent claims. Optional features are set out in the appended dependent claims. Any examples and embodiments of the description not falling within the scope of the claims do not form part of the invention as defined by the independent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect of the disclosed technology comprises a computer-implemented method of estimating a transmission rate of security threats present in a communications network comprising a plurality of nodes, the method comprising: receiving a plurality of network states corresponding to a sequence of timesteps, wherein a network state comprises records of which of the plurality of nodes are infected with the security threat, calculating an infection delta for one or more pairs of network states corresponding to consecutive timesteps by determining, for the pair of network states, the number of uninfected nodes in the earlier timestep which become infected in the later timestep, and estimating a transmission rate by aggregating the infection deltas between the one or more pairs of network states.

In some preferred examples, for a pair of network states, the infection delta is calculated by dividing the number of newly infected nodes in the later timestep by the number of uninfected nodes in the earlier timestep.

In some preferred examples, in response to detecting non-uniform differences between the timesteps of the plurality of network states, the method further comprises: inserting one or more estimated network states in between the one or more pairs of network states, wherein the difference between the timesteps of the pair of network states exceeds a predetermined time difference.

In some preferred examples, the predetermined time difference is the shortest time difference detected between the timesteps of pairs of network states.

In some preferred examples, the network states are estimated by fitting an exponential model to the number of infected nodes with respect to time for the one or more pairs of network states and the number of infected nodes is estimated according to the exponential model at timesteps defined by the predetermined time difference.

In some preferred examples, upon the transmission rate exceeding a threshold, the method further comprising: preventing one or more of the infected nodes from communicating with other nodes in the communications network. And wherein upon the transmission rate falling short of the threshold, the method further comprising: allowing one or more of the infected nodes to communicate with other nodes in the communications network.

In some preferred examples, the method further comprises: identifying a plurality of infected nodes in a most recent network state of the plurality of network states, simulating a plurality of simulated network states corresponding to the spread of infection starting from each of the identified infected nodes using the transmission rate, calculating a similarity score for the identified infected nodes of the simulated network states by comparing each of the simulated network states with the most recent network state, and identifying one or more candidate origin nodes from the plurality of identified infected nodes which correspond to simulated network states with a similarity score which exceeds a threshold.

In some preferred examples, the method further comprises: automatically preventing one or more of the candidate origin nodes from communicating with other nodes in the communications network.

In some preferred examples, the method further comprises: identifying origin network states from a plurality of historical network states where only the identified one or more identified candidate origin nodes are infected, wherein the historical network states are captured at timesteps before the plurality of network states, identifying one or more threat origin nodes by identifying which of the one or more origin network states comprise a number of infected nodes which falls below a threshold, and preventing one or more of the threat origin nodes from communicating with other nodes in the communications network.

In some preferred examples, the method further comprises: determining a detection rate of a security threat, wherein the detection rate corresponds to the time from when a node is infected to when it is recorded as infected in a network state, wherein simulating the plurality of simulated network states further comprises using the detection rate.

In some preferred examples, the method further comprises: simulating future network states using the transmission rate, the detection rate, the one or more candidate origin nodes and/or the one or more threat origin nodes.

In some preferred examples, the method further comprises: updating the simulation in response to one or more preventative measures being introduced into the simulated future network states, determining one or more preventative measures which result in the number of nodes being infected falling below a threshold in one of the simulated future network states, selecting the one or more preventative measures that fall below the threshold, and implementing the one or more selected preventative measures in the communications network.

In some preferred examples, a network topology of the plurality of network states is stored as a graph.

Another aspect of the disclosed technology comprises a device connected to a communications network, wherein the communications network comprises a plurality of nodes, for estimating transmission rate of a security threat present in the communications network, wherein the device is configured to: receive a plurality of network states corresponding to a sequence of timesteps, wherein a network state comprises records of which of the plurality of nodes are infected with the security threat, calculate an infection delta for one or more pairs of network states corresponding to consecutive timesteps by determining, for the pair of network states, the number of uninfected nodes in the earlier timestep which become infected in the later timestep, and estimate a transmission rate by aggregating the infection deltas between the one or more pairs of network states.

In some preferred examples, the device is further configured to: identify a plurality of infected nodes in the most recent network state of the plurality of network states, simulate a plurality of simulated network states corresponding to the spread of infection starting from each of the identified infected nodes by using the transmission rate, calculate a similarity score for the identified infected nodes of simulated network states by comparing each of the simulated network states with the most recent network state, and identify one or more origin candidate nodes from the plurality of identified infected nodes which correspond to simulated network states with a similarity score which exceeds a threshold.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 illustrates schematically a communications network.
FIG. 2 illustrates schematically a sequence of network states infected with malware.
FIG. 3 illustrates a process of calculating a transmission rate from a sequence of network states.
FIG. 4 is a flow diagram for a method of estimating a transmission rate of malware present in a communications network.
FIG. 5 illustrates an example process of identifying candidate origin nodes.
FIG. 6 is a flow diagram of an example method of identifying candidate origin nodes in a communications network.
FIG. 7 illustrates a process of estimating the effect of preventative measures implemented in a communications network.
FIG. 8 illustrates schematically a general purpose computing device suitable for implementing the processes of any of FIGs. 3 to 7.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

When widescale intrusion is detected on a communications network, it can be challenging to determine the precise nature and origin of the threat. This is made more challenging considering the vast amount of malicious network attacks that occur daily. As many as 4000 attacks in one day in a communications network have to be addressed. Therefore, rapid and/or automated response methods of nullifying such threats are highly desirable when dealing with such a volume of threats.

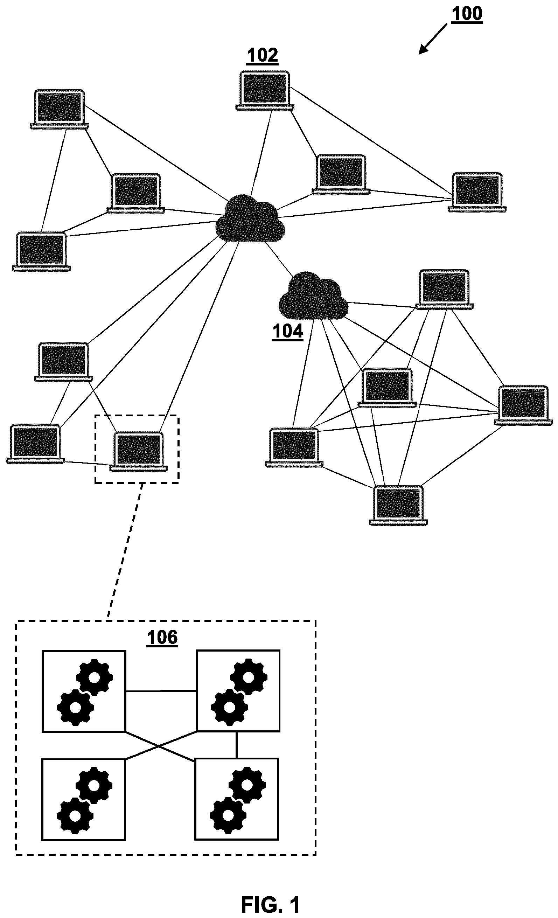

Network states are captured to monitor the extent to which nodes of a communications network have been infected. A network state comprises records of which of a plurality of nodes in a communications network are infected with a security threat. A security threat refers to any undesired software which may be specifically designed to disrupt, damage, or gain unauthorised access to a computer system. A common example of such a security threat is malware. Other examples include: ransomware, trojans, adware, spyware, distributed denial of service (DDoS) attacks, spam/phishing, corporate account takeover (CATO) and computer viruses. Nodes are either redistribution points (e.g., servers in a core of a network), end points (e.g., a user's computer) or software components (e.g., dynamic link libraries (DLLs), virtual machines or executables) stored within devices, that are capable of creating, receiving or transmitting information over a communications channel or within an isolated device. Network states are determined by collecting diagnostic reports sent from nodes within a communications network periodically. A diagnostic report comprises measurements obtained by the node, such as packet drop rate, packet throughput rate, available bandwidth, available memory, error codes associated with presence of a security threat such as malware, or other measurements. The diagnostic reports may be collected by a central server; the central server compiles the collected diagnostic reports to form the network states. The central server may use one or more rules to facilitate forming the network states from the diagnostic reports. A network state 100 can be represented as a topological model where the network topology for a network state is stored as a graph. An example of a topological model is shown in FIG. 1 which shows a plurality of computing devices 102 connected, as shown by the lines, with additional computing devices 102 and network devices 104 (e.g., firewalls). A plurality of software components 106 also serving as nodes in the communications network is also shown installed within an computing device in FIG. 1.

Storing the network topology as a graph means that the network connections between nodes are captured as well as the nodes themselves. This allows the simulation of threats between different nodes and because it's graphical, it is possible to use the strength of connections to model the transmission probabilities. The graph format is also highly extensible, which is beneficial should new information become available (e.g., following the inclusion of new devices into the communications network) or if the topology is modified (e.g., forming a new connection between a pair of nodes in the communications network). This provides a more flexible and adaptable alternative when compared to rigid data structures which comprise lists of devices.

Once a security threat is identified on a node (such as by a report from a human user, or by automated measurements obtained in a diagnostic report), a network state is recorded. The recorded network state records which of the nodes in the network also host the security threat (since the diagnostic reports indicate whether the security threat is present or not). Nodes which host the security threat are referred to as "infected" nodes.

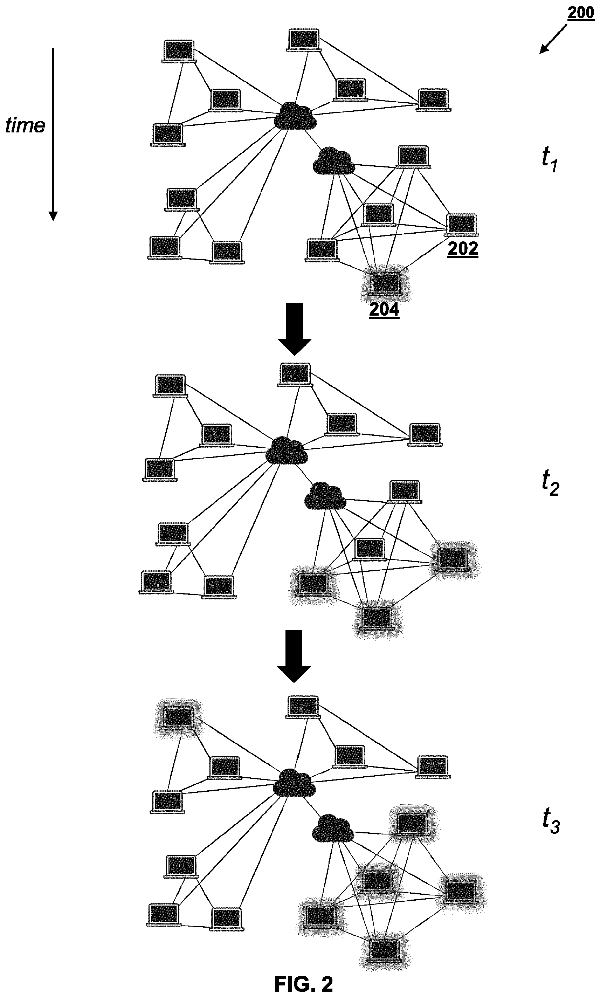

FIG. 2 shows a series of network states captured at three timesteps *t₁ t₂ t₃* following the infection of one node. At *t₁* an infected node 204 is present within the network and is connected to other uninfected nodes 202. *t₂* and *t₃* show subsequent network states captured at timesteps following *t₁*, where the infection (showed by nodes with a blurred outline) has spread to additional nodes. Although it is not illustrated in FIG. 2, software components installed in the computing devices are also infected in some examples.

To combat the threat, it is important to evaluate the nature of the security threat, identify where the security threat originated as well as predicting how the security threat is likely to propagate in the future. This information is considered when deploying preventative strategies as well as being able to identify the nodes in the network responsible for the spread of security threats.

In some circumstances, a security threat may have infected a significant number nodes whilst remaining dormant making the security threat difficult to detect. Once the security threat is detectable it may have already existed within the network for a significant period of time. As a result, in order to respond quickly, one cannot simply refer to historical network state records to find which node was first infected. This is because retrieving and sorting through a large volume of network states requires a large amount of computational resource and would likely not be completed in time to prevent further infection and/or damage caused by the security threat.

Evaluating the nature of the security threat behaviour provides information of how quickly a preventative strategy (e.g., isolating nodes in the network) should be deployed. For example, if the evaluation finds that the security threat is infecting nodes at a fast rate (i.e., it has a high transmission rate) then it may be preferable to perform immediate isolation of a node, whereas if the evaluation finds the security threat has a low transmission rate, then it may be preferable take a more conservative approach to avoid isolating nodes which pose no danger to the network. Such a decision can only be made as quickly as the determination of the transmission rate of the security threat.

In addition, the evaluation of the nature of the security threat can reduce the time and improve the accuracy of identifying the node(s) in which the security threat originated (i.e., the origin node(s)). For example, by knowing how quickly a security infects neighbouring nodes, a simulation can determine whether it was possible for certain nodes to be the origin point.

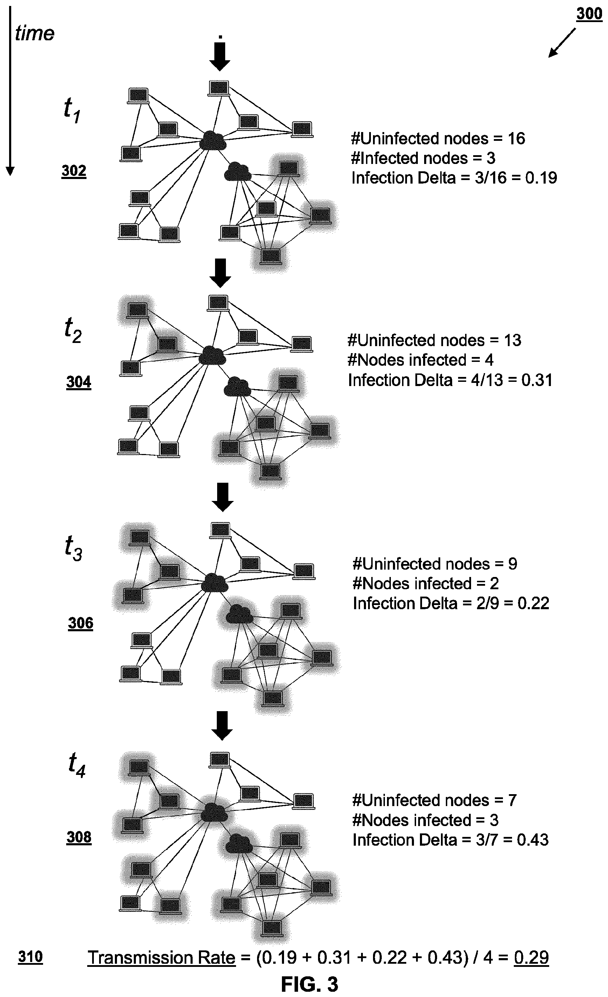

FIG. 3 illustratively describes an example method of determining an infection parameter associated with a piece of malware which has infected a network. The example illustrated and described in relation to FIG. 3 refers to malware as the security threat. The use of malware as an example is not intended to be limiting. Specifically, FIG. 3 shows a method of determining the transmission rate of a piece of malware by using a plurality of network states corresponding to a sequence of time steps. 16 nodes are included in the example shown in FIG. 3 made up of 14 computing devices and 2 network devices such as core network nodes. Prior to the sequence of network states shown in FIG. 3, assume none of the 16 nodes were infected.

In one example, the network state captured at timestep *t₄* is the most recent network state (the state of the network at the present time). Using the most recent network states means that historical network states extending into the past do not need to be constantly stored. The network states captured at timesteps *t₁* to *t₃* are therefore past network states. The past network states correspond to real data.

302 shows a network state at a timestep (*t₁*) where 3 nodes of the network have been infected (nodes which are shaded showing they are infected). An infection delta is calculated by dividing the number of newly infected nodes by the number of nodes which were previously uninfected. For timestep *t₁* the infection delta is 3 (number of newly infected nodes) divided by 16 (number of nodes previously uninfected) which equals 0.19.

304 shows the network state at timestep *t₂* which follows *t₁* that 4 more nodes have been infected. Using the same method as used in 302, the infection delta is 4 divided by 13 (number of nodes previously uninfected. Note that 3 out of the 16 uninfected nodes in 302 were infected leaving 13 uninfected nodes) which equals 0.31. Put differently, the infection delta is therefore calculated for pairs of network states captured at consecutive timesteps.

306 and 308 shows two additional network states captured at timesteps *t₃* and *t₄* showing additional nodes being infected. The infection delta between the pair of network states at timesteps *t₂* and *t₃* is calculated as 0.22 and between *t₃* and *t₄* is 0.43. The four infection deltas calculated from 4 pairs of consecutive network states are then averaged at 310 to produce an estimated transmission rate. In this example the transmission rate is calculated to be 0.29. Although four infection deltas are used to calculate the infection rate in the example shown in FIG. 3, any number of plurality of pairs of network states can be used.

The transmission rate 310 estimation serves as an indication as to how quickly malware infects neighbouring nodes in a communications network. As will be described later, the transmission rate 310 estimation can be used in simulations to predict which node(s) in a network were likely to be the origin of the malware. Furthermore, the transmission rate 310 estimation can be used as an input into a simulation to predict the spread of malware in the future which is important when determining which preventative strategy to adopt in response to detection of the malware.

The example shown in FIG. 3 assumes that the difference between the timesteps is uniform such that each infection delta is weighted equally when they are aggregated to produce the transmission rate estimation. However, in practice, non-uniform timesteps between network states are often inevitable.

Using FIG. 3 as an example, if the timesteps between *t₁* to *t₄* were non-uniform, a basic work around would be to use a weighted average approach across all the timesteps. Following such an approach risk producing transmission rate estimations which are significant overestimates or significant underestimates and do not capture the true behaviour of how an infection propagates. From the example in FIG. 3, at *t₄* 12 out of 16 initially uninfected nodes are now infected meaning an infection delta across timesteps *t₁* to *t₄* (4 timesteps) would be 0.75. Which would produce a weighted transmission rate per timestep of 0.75/4 = 0.19 and significantly underestimate the transmission rate of the malware. Underestimating the transmission rate would result in significant consequences for the communications network since preventative strategies may not be implemented fast enough because of the estimated low transmission rate.

In examples described herein, where the time difference between timesteps is non-uniform a fill procedure is employed. The fill procedure inserts estimated network states between pairs of real network states to ensure the time steps between the sequence of real and estimated network states is uniform. Once the fill procedure is complete, the transmission rate can be calculated for uniform time steps as shown in FIG. 3. Employing the fill procedure means malware behaviour can be evaluated more accurately since network states with non-uniform timesteps can also be used in the transmission rate estimation.

In one example, the time difference between timesteps between real and estimated network steps is predetermined. In one example, the predetermined time difference is selected to be the shortest time difference between timesteps of a pair of real network states. In another example, the predetermined time difference is selected based on the amount of computer resource available. If there is reduced computational capacity available, a relatively long time difference may be selected such that less network states are taken into account when estimating the transmission rate. If there is ample computational capacity available, a relatively short time difference may be selected such that more network states are taken into account when estimating the transmission rate.

The estimated network states comprise an estimated number of nodes which are infected at the timestep between a pair of real network states. In one example, the estimated network state (i.e., the estimated number of infected nodes) is calculated using the length of time between the timesteps of the estimated network state and real network state and the difference in the number of infected nodes between the pair of real network states in between which the estimated network state is being inserted. In another example, the network state (i.e., the estimated number of infected nodes) is calculated by fitting an exponential model for the number of infected nodes with respect to time between the pair of real network states and the number of infected nodes at a specific timestep is estimated from the exponential model. In another example, a machine learning model is trained using historical network states to interpolate network states such that network states can be estimated between pairs of real network states.

In one example, preventative measures to prevent or reduce the spread of malware are implemented in the communications in response to the transmission rate exceeding a predetermined threshold. If the transmission rate exceeded a threshold (i.e., the malware is considered to spread quickly) severe preventative measures would be taken to prevent further infection. In one example, one or more of the infected nodes would be isolated from the rest of the communications network such that the infected nodes are prevented from communicating from other nodes in the communications network. Whereas if the transmission rate were to fall short of the threshold (i.e., the malware is considered to spread slowly) less severe or no preventative measures would be implemented. For example, the infected nodes would be allowed to communicate with other nodes in the communications network.

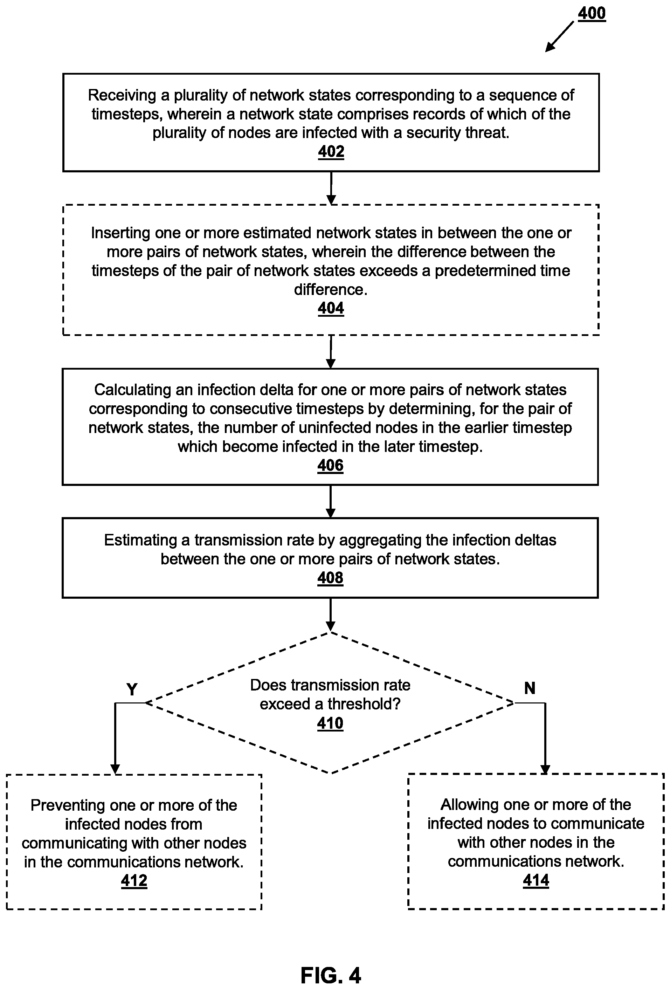

FIG. 4 shows a flow diagram of a method, corresponding to the method illustrated in FIG. 3, for estimating infection parameters of malware in a communications network (e.g., 100). The method 400 is performed by any device which can receive network states. In one example, the method 400 is performed by a node in the communications network. The node performing the method 400 is also capable of implementing preventative measures in the network. In another example, the method 400 is performed by a computing device which is temporarily in communication with a node in the communications network such that it can gain access to databases storing historical network states.

At operation 402 of the method 400, a plurality of network states corresponding to a sequence of timesteps is received. The network state comprises records of which of the nodes in the communications network are infected with a security threat.

At operation 404, which is an optional operation, one or more estimated network states are inserted between the one or more pairs of network states. This is performed for pairs of network states where the difference between the timesteps of the pair of network states exceeds a predetermined time difference.

At operation 406, an infection delta is calculated for one or more pairs of network states corresponding to consecutive timesteps. This is performed by determining, for the pair of network states, the number of uninfected nodes in the earlier timestep which become infected in the later timestep.

At operation 408, a transmission rate is estimated by aggregating the infection deltas between the one or more pairs of network states.

Optionally, at operation 410 it is determined whether the transmission rate exceeds a threshold. If the transmission rate exceeds a threshold, the method 400 proceeds to operation 412 where one or more of the infected nodes are prevented from communicating with other nodes in the communications network. If the transmission rate does not exceed a threshold, the method 400 proceeds to operation 414 where one or more of the infected nodes are allowed to communicate with other nodes in the communications network.

As discussed previously, identification of the node or nodes in a communications network from which a security threat originated is useful for a number of reasons. Firstly, nodes responsible can be permanently removed or isolated from a communications network such that they are prevented from spreading security threats such as malware in the communications network again. Secondly, the spread of the infection throughout the communications network can be more accurately simulated by knowing where the malware is spreading from. Overall, identification of the security threat origin in a communications network is a key step in the investigation process fir an attack.

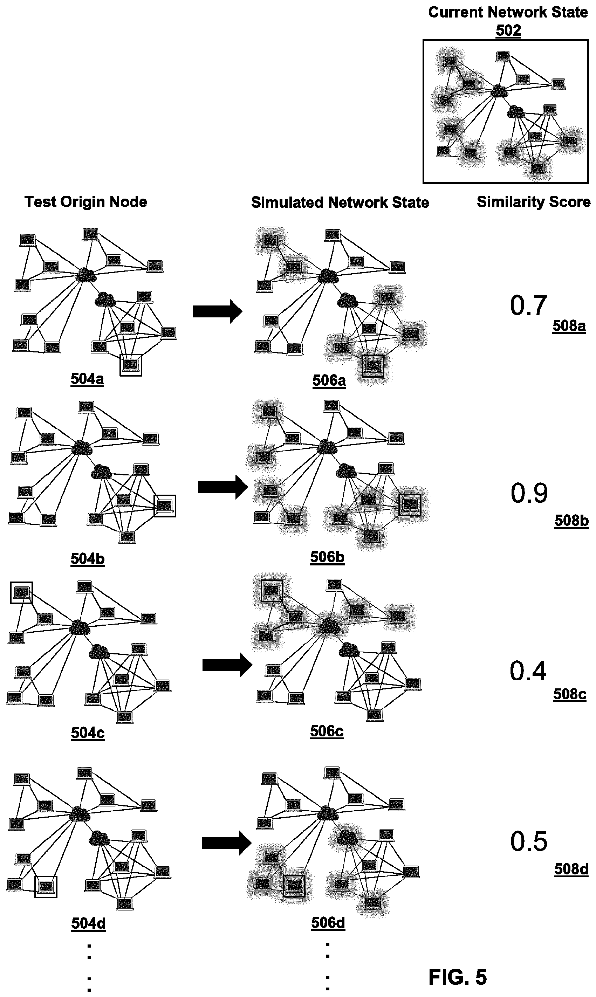

FIG. 5 shows an illustrative representation of a method of estimating which nodes in a network are likely origins of malware introduced into a communications network. The example illustrated and described in relation to FIG. 5 refers to malware as the security threat. The use of malware as an example is not intended to be limiting.

A current network state 502 is received and nodes which are infected with malware in the current network state are identified. From the identified infected nodes, the spread of the malware is simulated as starting from each of the identified infected nodes. 504a-504d show different test origin nodes being selected from the identified infected nodes in the current network state 502.

As illustrated by 506a-506d separate simulations are performed where the malware originates from different test origin nodes. In one example, the estimated transmission rate 310 (calculated using the methods described in relation to FIGs. 3 and 4) is used in the simulations to generate the simulated network states. In another example, the simulation is constructed from a topological model of the current network state 502 in addition to the estimated transmission rate 310.

The simulated network state 506a-506d for each simulation is then compared with the current network state 502. Based on the comparison, a similarity score 508a-508d is generated which is a measure of how closely the simulated network state resembles the current network state 502. A similarity score is generated for each of the test origin nodes. In one example, the similarity score is calculated using Jaccard similarity. In another example, an overlap coefficient is used to calculate the similarity score. Other similarity metrics may be used. In another example, graph-based algorithms for calculating similarity are used.

Since the similarity scores 508a-508d are only estimations, test origin nodes which produce a similarity score above a predefined threshold are identified as origin candidate nodes. Referring to the example in FIG. 5, the test origin node in 504b produces the highest similarity score 508b. In one example, the threshold is set at 0.7 which would mean the test origin nodes in 508a and 508b would both be considered candidate origin nodes. In some cases the threshold is determined empirically on a trial and error basis. In other example the threshold is tuneable according to the method of similarity calculation (i.e., to account for potential errors in the similarity calculation) or the threshold is selected based on outcomes of previously implemented thresholds stored in historical data.

In one example, following the candidate origin nodes being identified, preventative measures are implemented which prevent the candidate origin nodes from communicating with other nodes in the communications network.

Using the estimated transmission rate enables a more accurate simulation to be performed since the malware may not have time to travel from a first node to second node in the communications network which can be determined using the estimated transmission rate. A simulated network state using the first or second nodes (from the above example) as the origin node would therefore produce a low similarity score.

In one example, a detection rate of the malware is also calculated. The detection rate represents a measure of the time from when a node is infected to when it is recorded as infected in a network state. In one example, the detection rate is calculated by modelling how quickly malware is detected on a device/software using historical infection data (i.e., information of when the malware was received and when it was detected) and/or the frequency at which diagnostic reports are generated. In another example, the detection rate is calculated by comparing indicators or alerts for nodes in the current network state 502 with known indicators or alerts for nodes that have later been confirmed as infected in earlier network states. For instance, if there is an alert for a node accessing a domain and this node is confirmed to be infected in a later network state, the accessing of the domain is an indicator of possible infection. This indicator (or other suitable indicators) can be used in future network states to estimate the detection rate of nodes that could be infected.

In one example, the detection rate of the malware is used in combination with the estimated transmission rate in the simulations 506a-506d. Using the detection rate enables a more accurate simulation to be performed since there may be scenarios where malware has already spread from a first node to second node before the malware has been detected at the first node. Therefore, in this example scenario, a network state may indicate that two nodes were infected at the same time due the detection rate not being accounted for. Factoring in the detection rate into simulations corrects for the time is takes for infection to appear in network states.

In another example, simulating the spread of malware from the test origin nodes to identify origin node candidates is performed in isolation from the estimated transmission rate. This scenario may arise where an instant response is required and there is not enough time to estimate a transmission rate. This approach will compromise accuracy for quick identification of origin node candidates.

In another example, the origin nodes are identified by running a simulation of the spread of malware in reverse until one or more candidate origin node(s) are identified. Running the simulation in reverse may be performed multiple times and the results from the multiple simulations are aggregated to identify one or more candidate origin node(s). As described above, this example may be performed in isolation from the estimated transmission rate. In this example, the simulation is constructed from a topographical model of the current network state 502.

As discussed previously, identifying candidate origin node using the method illustrated in FIG. 5 (i.e., simulating the spread of malware starting from multiple nodes) is more efficient than retrieving historical network states because processing a large corpus of network states requires substantial computational resources to identify a historical network state when the malware first appeared in the communications network. The method illustrated in FIG. 5 is therefore independent of historical states.

If the historical network states were available, identified candidate origin node can be used to filter through the historical network states in some examples. In this example, historical network states where only the candidate origin nodes are infected would be retrieved. From the retrieved historical network states, those in which a number of infected nodes falls below a predetermined threshold would be examined to identify a threat origin node. Put differently, the historical network states which fall below the threshold would represent the network states when the malware was first introduced into the communications network. Although using the identified candidate origin nodes to filter through historical network states requires additional computational processing, it provides more accurate identification of threat origin nodes. This reduces the likelihood that 'innocent' nodes are incorrectly labelled as threat origin nodes and thus reduce the likelihood they are incorrectly isolated from the communications network.

In one example, following the identification (and labelling) of threat origin nodes, preventative measures are implemented which prevent the threat origin nodes from communicating with other nodes in the communications network.

Therefore, the process illustrated in FIG. 5 is flexible to suit the needs of the situation where improved estimations of origin nodes can be provided if substantial computer resources are available and vice versa.

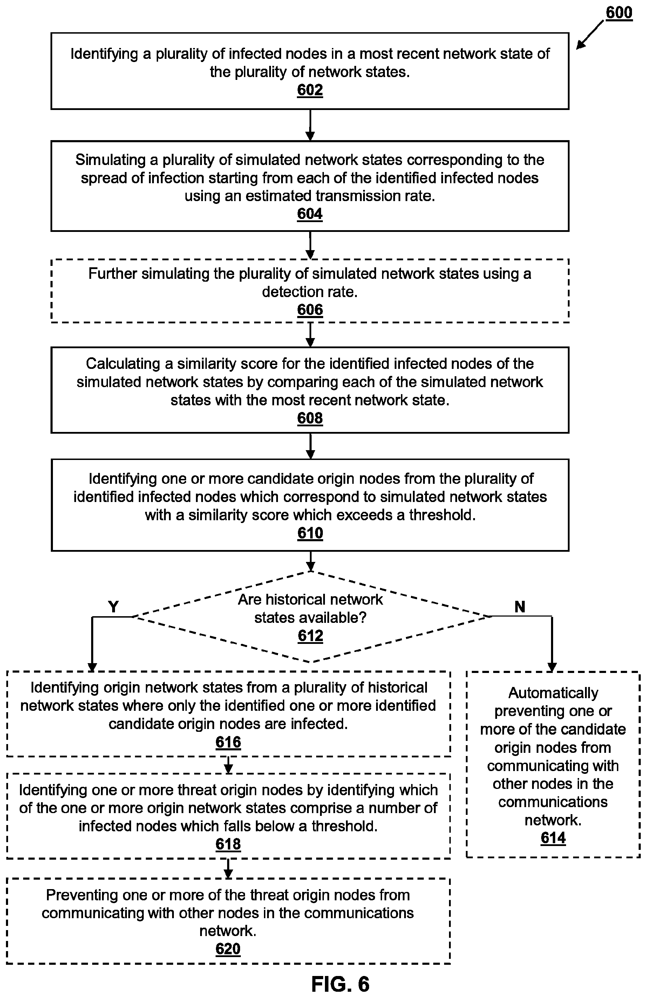

FIG. 6 shows a flow diagram of a method 600, corresponding to the method illustrated in FIG. 5, for estimating threat origin nodes in a communications network. In some examples, the method 600 is performed after the method 400.

At operation 602 of the method 600, a plurality of infected nodes in a most recent network state of the plurality of network states is identified.

At operation 604, a plurality of simulated network states is simulated which correspond to the spread of infection starting from each of the identified infected nodes using an estimated transmission rate.

Optionally, at operation 606, the simulated network states a simulated also using a detection rate of the security threat.

At operation 608, a similarity score is calculated for the identified infected nodes of the simulated network states by comparing each of the simulated network states with the most recent network state.

At operation 610, one or more candidate origin nodes are identified from the plurality of identified infected nodes which correspond to simulated network states with a similarity score which exceeds a threshold.

Optionally, at operation 612 it is determined whether historical network states are available. If they are not available, the method 600 proceeds to operation 614 in some examples where one or more of the candidate origin nodes are automatically prevented from communicating with other nodes in the communications network.

Optionally, if historical network states are available, the method 600 proceeds to operation 616 in some examples. At operation 616, origin network states are identified from a plurality of historical network states where only the identified one or more identified candidate origin nodes are infected.

Optionally, at operation 618 one or more threat origin nodes are identified by identifying which of the one or more origin network states comprise a number of infected nodes which falls below a threshold.

Optionally, at operation 620 one or more of the threat origin nodes are prevented from communicating with other nodes in the communications network.

Following the estimation of the transmission rate (as shown in FIGs. 3 and 4) future network states that occur after the current network state can be simulated where such simulations can use the estimated transmission rate. In another example, the simulations of future network states also use the one or more candidate origin nodes (shown in FIGs 5 and 6). In another example, the simulations of future network states also use the one or more threat origin nodes (described above). In another example, the simulations of future network states also use the detection rate. In some examples, simulating the future network states uses the estimated transmission rate without the candidate origin nodes or threat origin nodes. In another example, the simulations of future network states use the estimated transmission rate in combination with the detection rate, the candidate origin nodes and/or the threat origin nodes.

The simulated future network states can be used to inform decision making in response to the detection of malware in a communications network. In some examples, the simulations of future network states also factor the effect of implementing preventative strategies on the communications network. The preventative measures comprise any actions taken with respect to the communications network which prevent or reduce the transmission of the detected malware to other nodes in the communications network. Examples of preventative measures include isolating individual nodes from the rest of the communications network by instructing nodes in the network to not accept communication from an identified node. Another preventative measure comprises remotely deactivating a node in the communications network. Other examples of preventative strategies include: blocking domains, blocking ports, killing applications, running additional investigative protocols and providing an alert to an analyst.

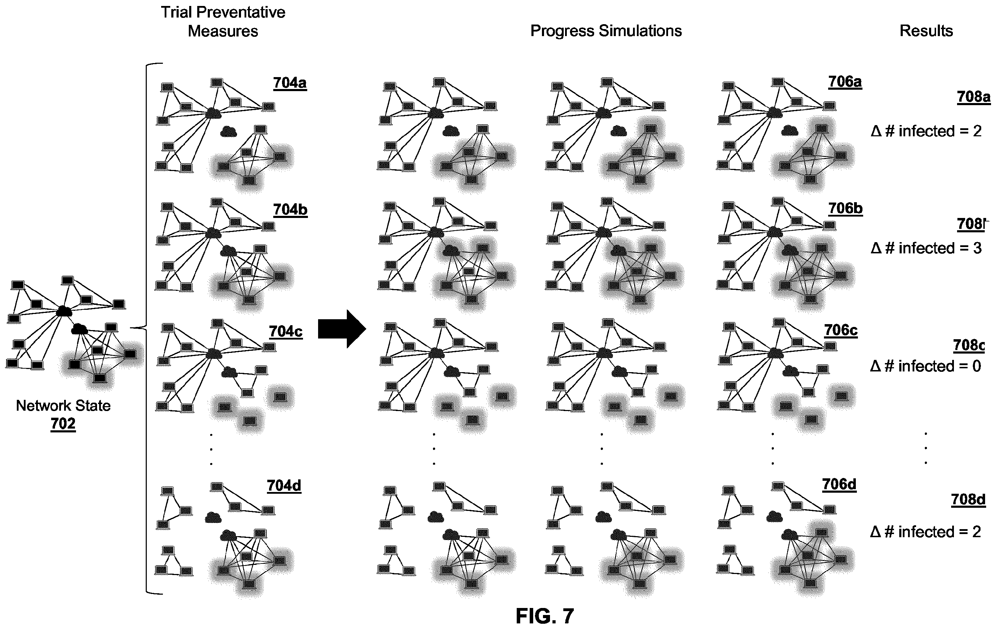

FIG. 7 illustratively represents simulating future network states where the response to preventative measure is also simulated. A current network state 702 is retrieved which serves as the starting point for simulations of future network states. One or more trial preventative measures 704a-704d are then selected for simulation. 704a shows a preventative measure where a cloud server is isolated from a plurality of nodes. 704b shows a preventative measure where none of the nodes are isolated. 704c shows a preventative measure where all the infected nodes are completed isolated. 704d shows a preventative measure where cloud servers isolate groups of endpoints from each other.

The progression of simulations 706a-706d is shown for three timesteps and the results 708a-708d for each preventative measure is collected at the conclusion of the simulation. In the example illustrated in FIG. 7, the change in the number of infected nodes is used to determine the effectiveness of each preventative measure. Using this approach, preventative measure 704c is the preferred option. In another example, any preventative measure which results in an increase in the number of infected nodes that falls below a predetermined threshold is considered for implementation in the communications network. In another example, other metrics are used to determine the effectiveness of each preventative measure. The other metrics include: quality of service levels reported by end users, empirically measured statistics about network behaviour such as traffic throughput, packet loss rates, bandwidth levels, round trip times.

The process illustrated in FIG. 7 enables automatic and informed decisions to be implemented in response to the detection of malware in a communications network. Accurate simulations of future network states are possible since infection parameters relating to the malware are determined by estimating the transmission rate as well as candidate origin nodes and/or threat origin nodes. In addition, the infection parameters of the malware can be calculated automatically using real network states including the most recent network state and past network states since metrics associated with the communications network (e.g., the network states) have been stored previously. Therefore, the examples described above provide rapid and efficient preventative measures to be implemented in response to the detection of malware which is effective in addressed large volumes of malware threats.

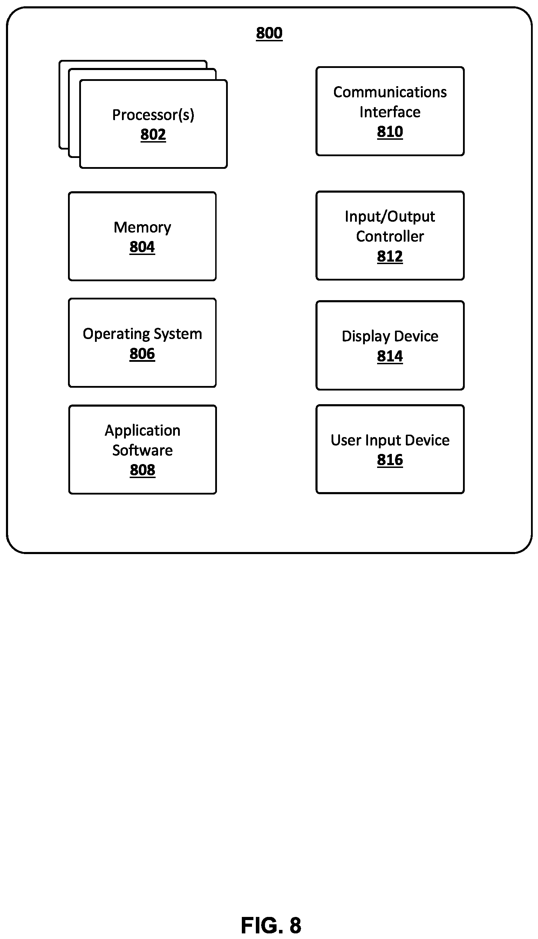

FIG. 8 illustrates various components of an example computing device 800 in which embodiments of FIGs 3-7 are implemented in some examples. The computing device is of any suitable form such as a smart phone, a desktop computer, a tablet computer, a laptop computer, or a server. In some cases, the computing device 800 is a management node of a communications network.

The computing device 800 comprises one or more processor(s) 802 which are microprocessors, controllers or any other suitable type of processors for processing computer executable instructions to control the operation of the device in order to perform the methods of figures 4 and 6. In some examples, for example where a system on a chip architecture is used, the processors 802 include one or more fixed function blocks (also referred to as accelerators) which implement a part of the method of figures 4 and 6 in hardware (rather than software or firmware). That is, the methods described herein are implemented in any one or more of software, firmware, or hardware. The computing device has a data store holding 804. Platform software comprising an operating system 806 or any other suitable platform software is provided at the computing-based device to enable application software 808 to be executed on the device. Although the computer storage media (memory 804) is shown within the computing-based device 800 it will be appreciated that the storage is, in some examples, distributed or located remotely and accessed via a network or other communication link (e.g., using communication interface 810).

The computing-based device 800 also comprises an input/output controller 812 arranged to output display information to a display device 814 which may be separate from or integral to the computing-based device 800. The display information may provide a graphical user interface. The input/output controller 812 is also arranged to receive and process input from one or more devices, such as a user input device 816 (e.g., a mouse, keyboard, camera, microphone, or other sensor). In some examples the user input device 816 detects voice input, user gestures or other user actions. In an embodiment the display device 814 also acts as the user input device 816 if it is a touch sensitive display device. The input/output controller 812 outputs data to devices other than the display device in some examples.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer-implemented method (400) of estimating a transmission rate of security threats present in a communications network comprising a plurality of nodes, the method comprising:
receiving (402) a plurality of network states corresponding to a sequence of timesteps, wherein a network state comprises records of which of the plurality of nodes are infected with the security threat;
calculating (406) an infection delta for one or more pairs of network states corresponding to consecutive timesteps by determining, for the pair of network states, the number of uninfected nodes in the earlier timestep which become infected in the later timestep; and
estimating (408) the transmission rate by aggregating the infection deltas between the one or more pairs of network states.

2. The method as claimed in claim 1, wherein, for a pair of network states, the infection delta is calculated by dividing the number of newly infected nodes in the later timestep by the number of uninfected nodes in the earlier timestep.

3. The method as claimed in claim 1 or claim 2, wherein in response to detecting non-uniform differences between the timesteps of the plurality of network states, the method further comprises:
inserting (404) one or more estimated network states in between the one or more pairs of network states, wherein the difference between the timesteps of the pair of network states exceeds a predetermined time difference.

4. The method as claimed in claim 3, wherein the predetermined time difference is the shortest time difference detected between the timesteps of pairs of network states.

5. The method as claimed in claim 3 or claim 4, wherein the network states are estimated by fitting an exponential model to the number of infected nodes with respect to time for the one or more pairs of network states and the number of infected nodes is estimated according to the exponential model at timesteps defined by the predetermined time difference.

6. The method as claimed in any preceding claim, wherein upon the transmission rate exceeding a threshold, the method further comprising:
preventing (412) one or more of the infected nodes from communicating with other nodes in the communications network; and
wherein upon the transmission rate falling short of the threshold, the method further comprising:
allowing (414) one or more of the infected nodes to communicate with other nodes in the communications network.

7. The method as claimed in any preceding claim, further comprising:
identifying (602) a plurality of infected nodes in a most recent network state of the plurality of network states;
simulating (604) a plurality of simulated network states corresponding to the spread of infection starting from each of the identified infected nodes using the transmission rate;
calculating (608) a similarity score for the identified infected nodes of the simulated network states by comparing each of the simulated network states with the most recent network state; and
identifying (610) one or more candidate origin nodes from the plurality of identified infected nodes which correspond to simulated network states with a similarity score which exceeds a threshold.

8. The method as claimed in claim 7, further comprising:
automatically preventing (614) one or more of the candidate origin nodes from communicating with other nodes in the communications network.

9. The method as claimed in claim 7, further comprising:
identifying (616) origin network states from a plurality of historical network states where only the identified one or more identified candidate origin nodes are infected, wherein the historical network states are captured at timesteps before the plurality of network states;
identifying (618) one or more threat origin nodes by identifying which of the one or more origin network states comprise a number of infected nodes which falls below a threshold; and
preventing (620) one or more of the threat origin nodes from communicating with other nodes in the communications network.

10. The method as claimed any of claims 7 to 9, further comprising:
determining a detection rate of a security threat, wherein the detection rate corresponds to the time from when a node is infected to when it is recorded as infected in a network state; wherein
simulating the plurality of simulated network states further comprises using the detection rate.

11. The method as claimed in claim 10, as dependent on claim 9, further comprising:
simulating future network states using the transmission rate, the detection rate, the one or more candidate origin nodes and/or the one or more threat origin nodes.

12. The method as claimed in claim 11, further comprising:
updating the simulation in response to one or more preventative measures being introduced into the simulated future network states;
determining one or more preventative measures which result in the number of nodes being infected falling below a threshold in one of the simulated future network states;
selecting the one or more preventative measures that fall below the threshold; and
implementing the one or more selected preventative measures in the communications network.

13. The method as claimed in any preceding claim, wherein a network topology of the plurality of network states is stored as a graph.

14. A device (800) connected to a communications network, wherein the communications network comprises a plurality of nodes, for estimating a transmission rate of a security threat present in the communications network, wherein the device is configured to:
receive (402) a plurality of network states corresponding to a sequence of timesteps, wherein a network state comprises records of which of the plurality of nodes are infected with the security threat;
calculate (406) an infection delta for one or more pairs of network states corresponding to consecutive timesteps by determining, for the pair of network states, the number of uninfected nodes in the earlier timestep which become infected in the later timestep; and
estimate (408) the transmission rate by aggregating the infection deltas between the one or more pairs of network states.

15. The device of any of claims 14, further configured to:
identify (602) a plurality of infected nodes in the most recent network state of the plurality of network states;
simulate (604) a plurality of simulated network states corresponding to the spread of infection starting from each of the identified infected nodes by using the transmission rate;
calculate (608) a similarity score for the identified infected nodes of simulated network states by comparing each of the simulated network states with the most recent network state; and
identify (610) one or more origin candidate nodes from the plurality of identified infected nodes which correspond to simulated network states with a similarity score which exceeds a threshold.

## Patentansprüche

1. Computerimplementiertes Verfahren (400) zum Schätzen einer Übertragungsrate von Sicherheitsbedrohungen, die in einem Kommunikationsnetz vorhanden sind, das mehrere Knoten umfasst, wobei das Verfahren Folgendes umfasst:
Empfangen (402) mehrerer Netzzustände, die einer Folge von Zeitschritten entsprechen, wobei ein Netzzustand Datensätze umfasst, von denen die mehreren Knoten mit der Sicherheitsbedrohung infiziert sind;
Berechnen (406) eines Infektionsdeltas für ein oder mehrere Paare von Netzzuständen, die aufeinander folgenden Zeitschritten entsprechen, durch das Bestimmen für das Paar von Netzzuständen der Anzahl von nicht infizierten Knoten in dem früheren Zeitschritt, die in dem späteren Zeitschritt infiziert werden; und Schätzen (408) der Übertragungsrate durch das Aggregieren der Infektionsdeltas zwischen dem einen oder den mehreren Paaren von Netzzuständen.

2. Verfahren nach Anspruch 1, wobei für ein Paar von Netzzuständen das Infektionsdelta durch das Dividieren der Anzahl neu infizierter Knoten in dem späteren Zeitschritt durch die Anzahl nicht infizierter Knoten in dem früheren Zeitschritt berechnet wird.

3. Verfahren nach Anspruch 1 oder Anspruch 2, wobei in Reaktion auf das Detektieren uneinheitlicher Differenzen zwischen den Zeitschritten der mehreren Netzzustände das Verfahren ferner Folgendes umfasst:
Einfügen (404) eines oder mehrerer geschätzter Netzzustände zwischen dem einen oder den mehreren Paaren von Netzzuständen, wobei die Differenz zwischen den Zeitschritten des Paars von Netzzuständen eine vorgegebene Zeitdifferenz überschreitet.

4. Verfahren nach Anspruch 3, wobei die vorgegebene Zeitdifferenz die kürzeste Zeitdifferenz ist, die zwischen den Zeitschritten der Paare von Netzzuständen detektiert wird.

5. Verfahren nach Anspruch 3 oder Anspruch 4, wobei die Netzzustände durch Anpassen eines Exponentialmodells an die Anzahl infizierter Knoten in Bezug auf die Zeit für das eine oder die mehreren Paare von Netzzuständen geschätzt werden und die Anzahl infizierter Knoten gemäß dem Exponentialmodell in den Zeitschritten, die durch die vorgegebene Zeitdifferenz definiert sind, geschätzt wird.

6. Verfahren nach einem der vorhergehenden Ansprüche, wobei das Verfahren dann, wenn die Übertragungsrate einen Schwellenwert überschreitet, ferner Folgendes umfasst:
Verhindern (412), dass einer oder mehrere der infizierten Knoten mit anderen Knoten in dem Kommunikationsnetz kommunizieren; und
wobei das Verfahren dann, wenn die Übertragungsrate den Schwellenwert unterschreitet, ferner Folgendes umfasst:
Erlauben (414), dass einer oder mehrere der infizierten Knoten mit anderen Knoten in dem Kommunikationsnetz kommunizieren.

7. Verfahren nach einem der vorhergehenden Ansprüche, das ferner Folgendes umfasst:
Identifizieren (602) mehrerer infizierter Knoten in einem jüngsten Netzzustand der mehreren Netzzustände;
Simulieren (604) mehrerer simulierter Netzzustände, die der Ausbreitung einer Infektion entsprechen, beginnend bei jedem der identifizierten infizierten Knoten unter Verwendung der Übertragungsrate;
Berechnen (608) einer Ähnlichkeitspunktzahl für die identifizierten infizierten Knoten der simulierten Netzzustände durch Vergleichen jedes der simulierten Netzzustände mit dem jüngsten Netzzustand; und
Identifizieren (610) eines oder mehrerer Kandidatenursprungsknoten aus den mehreren identifizierten infizierten Knoten, die simulierten Netzzuständen entsprechen, mit einer Ähnlichkeitspunktzahl, die einen Schwellenwert überschreitet.

8. Verfahren nach Anspruch 7, das ferner Folgendes umfasst:
automatisches Verhindern (614), dass einer oder mehrere der Kandidatenursprungsknoten mit anderen Knoten in dem Kommunikationsnetz kommunizieren.

9. Verfahren nach Anspruch 7, das ferner Folgendes umfasst:
Identifizieren (616) von Ursprungsnetzzuständen aus mehreren historischen Netzzuständen, in denen nur der eine identifizierte oder die mehreren identifizierten Kandidatenursprungsknoten infiziert sind, wobei die historischen Netzzustände bei den Zeitschritten vor den mehreren Netzzuständen erfasst werden;
Identifizieren (618) eines oder mehrerer Bedrohungsursprungsknoten durch das Identifizieren, welcher des einen oder der mehreren Ursprungsnetzzustände eine Anzahl infizierter Knoten umfasst, die einen Schwellenwert unterschreitet; und
Verhindern (620), dass einer oder mehrere der Bedrohungsursprungsknoten mit anderen Knoten in dem Kommunikationsnetz kommunizieren.

10. Verfahren nach einem der Ansprüche 7 bis 9, das ferner Folgendes umfasst:
Bestimmen einer Detektionsrate einer Sicherheitsbedrohung, wobei die Detektionsrate der Zeitdauer von dem Zeitpunkt, zu dem ein Knoten infiziert wird, bis zu dem Zeitpunkt, zu dem er in einem Netzzustand als infiziert aufgezeichnet wird, entspricht; wobei das Simulieren der mehreren simulierten Netzzustände ferner das Verwenden der Detektionsrate umfasst.

11. Verfahren nach Anspruch 10, wenn abhängig von Anspruch 9, das ferner Folgendes umfasst:
Simulieren zukünftiger Netzzustände unter Verwendung der Übertragungsrate, der Detektionsrate, des einen oder der mehreren Kandidatenursprungsknoten und/oder des einen oder der mehreren Bedrohungsursprungsknoten.

12. Verfahren nach Anspruch 11, das ferner Folgendes umfasst:
Aktualisieren der Simulation in Reaktion darauf, dass eine oder mehrere präventive Maßnahmen in die simulierten zukünftigen Netzzustände eingeführt werden;
Bestimmen einer oder mehrerer präventiver Maßnahmen, die dazu führen, dass in einem der simulierten zukünftigen Netzzustände die Anzahl infizierter Knoten einen Schwellenwert unterschreitet;
Auswählen der einen oder der mehreren präventiven Maßnahmen, die den Schwellenwert unterschreiten; und
Implementieren der einen oder der mehreren ausgewählten präventiven Maßnahmen in dem Kommunikationsnetz.

13. Verfahren nach einem der vorhergehenden Ansprüche, wobei eine Netztopologie der mehreren Netzzustände als ein Diagramm gespeichert ist.

14. Vorrichtung (800), die mit einem Kommunikationsnetz verbunden ist, wobei das Kommunikationsnetz mehrere Knoten umfasst, zum Schätzen einer Übertragungsrate einer Sicherheitsbedrohung, die in dem Kommunikationsnetz vorhanden ist, wobei die Vorrichtung konfiguriert ist:
mehrere Netzzustände zu empfangen (402), die einer Folge von Zeitschritten entsprechen, wobei ein Netzzustand Datensätze umfasst, von denen die mehreren Knoten mit der Sicherheitsbedrohung infiziert werden;
ein Infektionsdelta für ein oder mehrere Paare von Netzzuständen, die aufeinander folgenden Zeitschritten entsprechen, durch das Bestimmen für das Paar von Netzzuständen der Anzahl nicht infizierter Knoten in dem früheren Zeitschritt, die in dem späteren Zeitschritt infiziert werden, zu berechnen (406); und
die Übertragungsrate durch das Aggregieren der Infektionsdeltas zwischen dem einen oder den mehreren Paaren von Netzzuständen zu schätzen (408).

15. Vorrichtung nach einem der Ansprüche 14, die ferner konfiguriert ist:
mehrere infizierte Knoten in dem jüngsten Netzzustand der mehreren Netzzustände zu identifizieren (602);
mehrere simulierte Netzzustände, die der Ausbreitung einer Infektion entsprechen, beginnend bei jedem der identifizierten infizierten Knoten unter Verwendung der Übertragungsrate zu simulieren (604);
eine Ähnlichkeitspunktzahl für die identifizierten infizierten Knoten simulierter Netzzustände durch das Vergleichen jedes der simulierten Netzzustände mit dem jüngsten Netzzustand zu berechnen (608); und
einen oder mehrerer Ursprungskandidatenknoten aus den mehreren identifizierten infizierten Knoten, die den simulierten Netzzuständen entsprechen, mit einer Ähnlichkeitspunktzahl, die einen Schwellenwert überschreitet, zu identifizieren (610).

## Revendications

1. Procédé (400) mis en œuvre par ordinateur pour l'estimation d'un taux de transmission de menaces de sécurité présentes dans un réseau de communication comprenant une pluralité de nœuds, le procédé comprenant :
la réception (402) d'une pluralité d'états de réseau correspondant à une séquence de pas de temps, un état de réseau comprenant des enregistrements de ceux de la pluralité de nœuds qui sont infectés par la menace de sécurité ;
le calcul (406) d'un delta d'infection pour une ou plusieurs paires d'états de réseau correspondant à des pas de temps consécutifs en déterminant, pour la paire d'états de réseau, le nombre de nœuds non infectés dans le pas de temps antérieur qui sont devenus infectés dans le pas de temps postérieur ; et estimation (408) du taux de transmission par agrégation des deltas d'infection entre la ou les paires d'états de réseau.

2. Procédé selon la revendication 1, dans lequel, pour une paire d'états de réseau, le delta d'infection est calculé en divisant le nombre de nœuds nouvellement infectés dans le pas de temps postérieur par le nombre de nœuds non infectés dans le pas de temps antérieur.

3. Procédé selon la revendication 1 ou la revendication 2, dans lequel, en réponse à la détection de différences non uniformes entre les pas de temps de la pluralité d'états de réseau, le procédé comprend en outre :
l'insertion (404) d'un ou plusieurs états de réseau estimés entre la ou les paires d'états de réseau, la différence entre les pas de temps de la paire d'états de réseau dépassant une différence de temps prédéterminée.

4. Procédé selon la revendication 3, dans lequel la différence de temps prédéterminée est la différence de temps la plus courte détectée entre les pas de temps de paires d'états de réseau.

5. Procédé selon la revendication 3 ou la revendication 4, dans lequel les états de réseau sont estimés en ajustant un modèle exponentiel au nombre de nœuds infectés en fonction du temps pour la ou les paires d'états de réseau et le nombre de nœuds infectés est estimé selon le modèle exponentiel à des pas de temps définis par la différence de temps prédéterminée.

6. Procédé selon l'une quelconque des revendications précédentes, dans lequel, lorsque le taux de transmission dépasse un seuil, le procédé comprend en outre :
l'empêchement (412) d'un ou plusieurs des nœuds infectés à communiquer avec d'autres nœuds du réseau de communication ; et
dans lequel, lorsque le taux de transmission tombe en deçà du seuil, le procédé comprend en outre :
l'autorisation (414) d'un ou plusieurs des nœuds infectés à communiquer avec d'autres nœuds du réseau de communication.

7. Procédé selon l'une quelconque des revendications précédentes, comprenant en outre :
l'identification (602) d'une pluralité de nœuds infectés dans un état de réseau le plus récent parmi la pluralité d'états de réseau ;
la simulation (604) d'une pluralité d'états de réseau simulés correspondant à la propagation de l'infection à partir de chacun des nœuds infectés identifiés en utilisant le taux de transmission ;
le calcul (608) d'un score de similitude pour les nœuds infectés identifiés des états de réseau simulés en comparant chacun des états de réseau simulés à l'état de réseau le plus récent ; et
l'identification (610) d'un ou plusieurs nœuds d'origine candidats parmi la pluralité de nœuds infectés identifiés qui correspondent à des états de réseau simulés ayant un score de similitude qui dépasse un seuil.

8. Procédé selon la revendication 7, comprenant en outre :
l'empêchement automatiquement (614) d'un ou plusieurs des nœuds d'origine candidats à communiquer avec d'autres nœuds du réseau de communication.

9. Procédé selon la revendication 7, comprenant en outre :
l'identification (616) d'états de réseau d'origine parmi une pluralité d'états de réseau historiques où seul ceux du ou des nœuds d'origine candidats identifiés qui ont été identifiés sont infectés, les états de réseau historiques étant capturés à des pas de temps précédant la pluralité d'états de réseau ;
l'identification (618) d'un ou plusieurs nœuds d'origine de menace en identifiant ceux du ou des états de réseau d'origine qui comprennent un certain nombre de nœuds infectés qui tombe en dessous d'un seuil ; et
l'empêchement (620) d'un ou plusieurs nœuds d'origine de menace à communiquer avec d'autres nœuds du réseau de communication.

10. Procédé selon l'une quelconque des revendications 7 à 9, comprenant en outre :
la détermination d'un taux de détection d'une menace de sécurité, le taux de détection correspondant au temps entre le moment où un nœud est infecté et le moment où il est enregistré comme étant infecté dans un état de réseau ;
la simulation de la pluralité d'états de réseau simulés comprenant en outre l'utilisation du taux de détection.

11. Procédé selon la revendication 10, lorsqu'elle dépend de la revendication 9, comprenant en outre :
la simulation d'états de réseau futurs en utilisant le taux de transmission, le taux de détection, le ou les nœuds d'origine candidats et/ou le ou les nœuds d'origine de menace.

12. Procédé selon la revendication 11, comprenant en outre :
la mise à jour de la simulation en réponse à une ou plusieurs mesures préventives introduites dans les états futurs simulés du réseau ;
la détermination d'une ou plusieurs mesures préventives ayant pour résultat que le nombre de nœuds infectés tombe en dessous d'un seuil dans l'un des états futurs simulés du réseau ;
la sélection de la ou des mesures préventives qui tombent en dessous du seuil ; et
la mise en œuvre de la ou des mesures préventives sélectionnées dans le réseau de communication.

13. Procédé selon l'une quelconque des revendications précédentes, dans lequel une topologie de réseau de la pluralité d'états de réseau est stockée sous la forme d'un graphe.

14. Dispositif (800) connecté à un réseau de communication, dans lequel le réseau de communication comprend une pluralité de nœuds, pour estimer un taux de transmission d'une menace de sécurité présente dans le réseau de communication, le dispositif étant configuré pour :
recevoir (402) une pluralité d'états de réseau correspondant à une séquence de pas de temps, un état de réseau comprenant des enregistrements de ceux de la pluralité de nœuds qui sont infectés par la menace de sécurité ;
calculer (406) un delta d'infection pour une ou plusieurs paires d'états de réseau correspondant à des pas de temps consécutifs en déterminant, pour la paire d'états de réseau, le nombre de nœuds non infectés dans le pas de temps antérieur qui sont devenus infectés dans le pas de temps postérieur ; et
estimer (408) le taux de transmission par agrégation des deltas d'infection entre la ou les paires d'états de réseau.

15. Dispositif selon la revendication 14, configuré en outre pour :
identifier (602) une pluralité de nœuds infectés dans l'état de réseau le plus récent de la pluralité d'états de réseau ;
simuler (604) une pluralité d'états de réseau simulés correspondant à la propagation de l'infection à partir de chacun des nœuds infectés identifiés en utilisant le taux de transmission ;
calculer (608) un score de similitude pour les nœuds infectés identifiés des états de réseau simulés en comparant chacun des états de réseau simulés à l'état de réseau le plus récent ; et
identifier (610) un ou plusieurs nœuds d'origine candidats parmi la pluralité de nœuds infectés identifiés qui correspondent à des états de réseau simulés ayant un score de similitude qui dépasse un seuil.
